# EUROPÄISCHE PATENTSCHRIFT

(11) **EP 1 318 590 B1**
(45) Veröffentlichungstag und Bekanntmachung des Hinweises auf die Patenterteilung: **19.11.2008**
(21) Anmeldenummer: 02026713.4
(22) Anmeldetag: 30.11.2002
(51) Int. Cl.: H02J 7/14

(54) **Stromversorgungseinrichtung mit zwei Akkumulatoren und zwei Generatoren in einem Nutzfahrzeug**
Power supply device with two batteries and two generators in a commercial vehicle
Dispositif d'alimentation de puissance avec deux batteries et deux générateurs dans un véhicule utilitaire

(30) Priorität: 05.12.2001 DE 10159796
(43) Veröffentlichungstag der Anmeldung: 11.06.2003
(73) Patentinhaber: MAN Nutzfahrzeuge Aktiengesellschaft, 80976 München (DE)
(72) Erfinder: Girst, Hans-Werner, Dipl.-Ing., 86153 Augsburg (DE); Fornfischer, Manfred, 85250 Altomünster (DE); Eisermann, Günter, 85757 Karlsfeld (DE); Bauer, Hannes, 80997 München (DE)

(56) Entgegenhaltungen:
- EP-A- 0 850 506
- EP-A- 1 093 974
- EP-A2- 0 410 617
- WO-A-02/07286
- DE-A- 4 028 242
- DE-A- 10 042 524
- US-A- 5 488 283
- US-A- 5 691 619
- US-A- 6 044 923

## Beschreibung

Die Erfindung betrifft eine Einrichtung nach dem Oberbegriff des Anspruches 1.

Kraftfahrzeuge allgemein, besonders aber Nutzfahrzeuge, wie Omnibusse und Lastkraftwagen, haben durch die bordeignen Verbraucher wie Bordrechner, Verstellmotoren, Reglergeräte, Innenbeleuchtungseinrichtungen, Kommunikationseinrichtungen, Kühlschränke und Fernseher, einen hohen Stromverbrauch.

Ein einziger Generator und ein Akkumulator reicht bezüglich der Nutzfahrzeuge meistens nicht mehr aus.

Aus der DE 199 07 852 A1 ist eine Vorrichtung dieser Art bekannt. Bei der genannten Vorrichtung werden von einem Verbrennungsmotor zwei Generatoren, die unterschiedliche Übersetzungsverhältnisse zum Verbrennungsmotor haben, eingesetzt. Der eine Generator hat im niedrigen Drehzahlbereich des Verbrennungsmotors seine optimale Leistungsabgabe und der weitere Generator im hohen Drehzahlbereich des Verbrennungsmotors.

Derjenige Generator, der die höhere Übersetzung vom Antriebsmotor her hat, ist mit einer schaltbaren Kupplung versehen.

Weiterhin ist eine Einrichtung mit zwei Generatoren und zwei Akkumulatoren aus Anwendungen im Pkw bekannt. Bei dieser Einrichtung wird über eine Diodenschaltung die Stromleistung der Generatoren auf zwei Stromkreise, je nach Strombedarf verteilt, wobei der Akkumulator für den Starter bevorzugt geladen wird und der genannte Akkumulator nicht durch Dauerverbraucher belastet ist.

Aus der US 4,347, 473 ist eine derartige Diodenschultenrg bekannt, mit der wahlweise zwei Stromkreise mittels zwei Generatoren mit Strom versorgt werden. Um eine Ausfallsicheschnit zu gewahsleisten sind in diesem Fall sowohl die Generatoren gleich groß dimensioniert, um bei Ausfall eines Generators beide Strombreise Gessorgen zu können, als auch die elektrischen Verbraucher luminiditlich ileres Anschlussleistung gleichmäßig auf die Stromkreise verteilt.

Die genannte Einrichtung hat ihre Leistungsgrenze aber etwa bei 140A. Für Nutzfahrzeuge, die über 140A Strom benötigen, ist eine Diodenschaltung der genannten Art nicht erhältlich und wäre außerdem zu teuer.

Aufgabe der Erfindung ist es, eine preiswerte und gut arbeitende Schaltung für über 140A Stromstärke für einen Fahrzeugbetrieb mit zwei Generatoren und zwei Akkumulatoren für Nutzfahrzeuge zu schaffen.

Die Aufgabe wird erfindungsgemäß durch die Merkmale des Anspruches 1 gelöst.

Dadurch, dass der Karosseriestromkreis Kr1 durch ein Relais K3 mit dem Anlasserstromkreis Kr2 verbindbar oder vom Anlasserstromkreis Kr2 trennbar ist, können beide Stromkreise entweder als ein Stromkreis oder zwei Stromkreise aktiv sein.

Weiterhin ist im Anlasserstromkreis Kr2 ein Relais K4 vorgesehen, das für die Schaltung für das Aufladen des Akkumulators im Anlasserstromkreis zuständig ist.

Nach dem Startvorgang bleibt das Relais K4 so lange geschlossen und das Relais K3 so lange geöffnet, wobei das Relais K3 den Anlasserstromkreis Kr2 und Karosseriestromkreis Kr1 voneinander trennt, bis der Akkumulator des Anlasserstromkreises voll aufgeladen ist. Durch diese Schaltung wird der Akkumulator Akk2 des Anlasserstromkreises Kr2 durch den Generator G2 des Anlasserstromkreises Kr2 bevorzugt aufgeladen. An den Anlasserstromkreis Kr2 sind nur die Verbraucher des Anlasserstromkreises angeschlossen, die weniger Strom verbrauchen, als die Verbraucher im Karosseriestromkreis Kr1 verbrauchen können. Deshalb sind in diesem Schaltzustand die beiden Stromkreise getrennt.

Wenn der Akkumulator Akk1 des Anlasserstromkreises Kr2 voll aufgeladen ist, wird über die Steuerung zuerst das Relais K4 geöffnet und dann das Relais K3 geschlossen. Dann liefern beide Generatoren G1, G2 Strom in die durch das Relais K3 zusammengeschalteten Stromkreise.

Durch das Öffnen des Relais K4 wird der Akkumulator Akk2 des Anlasserstromkreises Kr2. aus den genannten, zusammengeschalteten Stromkreisen herausgeschaltet und damit von den übrigen Verbrauchern getrennt. Für den Startvorgang steht ein vollgeladener Akkumulator zur Verfügung.

In einer weiteren Ausgestaltung der Erfindung kann eine Ladeerhaltungseinrichtung vorgesehen sein, die, wenn es erforderlich ist, den Akkumulator Akk2 im Anlasserstromkreis Kr2 nachlädt.

Anhand der Schaltungsmöglichkeiten bzw. der Stellungen des Schlüssels im Lenkradschloss werden im folgenden Text die elektrischen Schaltungen der erfindungsgemäßen Stromversorgungseinrichtung beschrieben:
a) der Schlüssel ist im Lenkradschloss nur eingesteckt, Stellung 0:
   a1) Das Relais K3 ist offen. Es bestehen zwei getrennte Stromkreise, der Karosseriestromkreis Kr1 und der Anlasserstromkreis Kr2
   a11) Der Karosseriestromkreis Kr1 besteht aus dem Karosserie-Akkumulator Akk1, dem entsprechenden Generator G1, den karosserieseitigen Steuergeräten und Verbrauchern, die nicht zum Anlassen nötig sind, wie z. B. Innenbeleuchtung, Zusatzheizung, Kofferraumbeleuchtung usw..
   a12) Der Anlasserstromkreis Kr2 besteht aus dem Anlasser-Akkumulator Akk2, dem, den Anlasserstromkreis zugeordneten Generator G2, dem Anlasser A und den für das Anlassen nötigen Elektroniken, wie z. B. dem Bordrechner, der Motorelektronik, der Elektronik für die Getriebesteuerung. Das Relais K4 ist geschlossen.
b) Der Schlüssel im Lenkradschloss ist eine Raststufe gedreht, Stellung I:
   b1) Das Relais K1 wird geschlossen. Die anderen Relais bleiben unbetätigt.
   b11) Die Verbraucher sind über das nun geschlossene Relais K1 angeschlossen. Es sind dadurch die Verbraucher wie Innenbeleuchtung, Elektronik für die Türsteuerung, Kühlschrank, Fernseher usw. angeschlossen und damit aktivierbar.
   b12) Der Karosseriestromkreis Kr1 und der Anlasserstromkreis Kr2 bleiben getrennt.
c) Der Schlüssel im Lenkradschloss ist eine weitere Stufe gedreht, Stellung II:
   c1) Das Relais K2 wird geschlossen. Die anderen Relais bleiben unbetätigt.
   c11) Die Verbraucher des Anlasserstromkreises Kr2 sind über das Relais K2 angeschlossen. Es werden dadurch die Verbraucher wie z. B. Erregerwicklung des Generators im Anlasserstromkreis, Motorelektronik, Elektronik zum Steuern und Schalten des Getriebes usw. bestromt.
   c12) Der Karosseriestromkreis Kr1 und der Anlasserstromkreis Kr2 bleiben getrennt.
d) Der Schlüssel im Lenkradschloss ist eine weitere Stufe gedreht, Stellung III (starten):
   d1) Der Dieselmotor wird über die Steuerung und den Anlasser A gestartet. Der Strom für den Anlasser A wird dem Akkumulator Akk2 entnommen.
   d11) Die Relais K3, K4 bleiben unbetätigt, das heißt K4 geschlossen, K3 offen K1 und K2 sind geschlossen.
   d12) Sobald die Generatoren G1, G2 Strom liefern, wird der Stromkreis Kr1 vom Generator G1 und der Stromkreis Kr2 vom Generator G2 versorgt.
   d13) Der Akkumulator Akk2 wird solange geladen, bis er voll aufgeladen ist. Wann der Akkumulator voll ist, kann entweder motordrehzahlabhängig und über die Motorlaufzeit oder über ein Strommessgerät erkannt werden.
   d14) Wenn der Akkumulator Akk2 aufgeladen ist, öffnet das Relais K4 und schließt das Relais K3. Der Akkumulator erhält damit keinen Ladestrom mehr. Beide Generatoren G1 und G2 liefern nun Strom in den Anlasserstromkreis Kr2 und den Karosseriestromkreis Kr1.
   d15) Es kann eine Ladeerhaltungsvorrichtung vorgesehen sein, die bei abfallender Spannung im Akkumulator Akk2, diesen nachlädt.

In der Zeichnung ist ein Ausführungsbeispiel der Erfindung schematisch dargestellt.

Es zeigen:
- Fig. 1: ein Schaltbild,
- Fig. 2: ein Schaltbild mit Ladeerhaltungseinrichtung,
- Fig. 3: ein Schaltbild zum Stand der Technik.

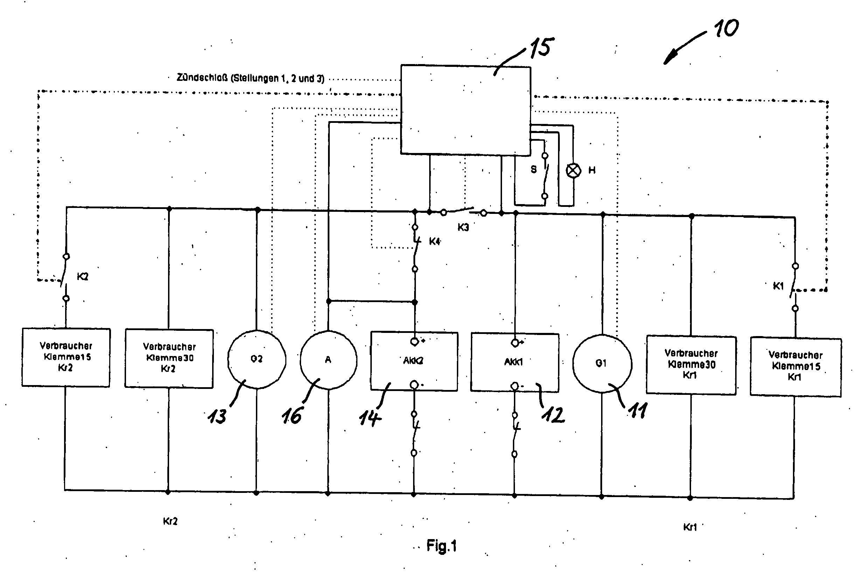

Die Fig. 1 zeigt das Schaltbild 10 mit zwei Stromkreisen Kr1, Kr2, dem Karosseriestromkreis Kr1 und dem Anlasserstromkreis Kr2. Die Stromkreise Kr1 und Kr2 sind durch das Relais K3 trennbar oder verbindbar. Das Relais K4 ist, wenn mit dem Anlasser 16 der Dieselmotor (nicht gezeichnet) gestartet wird, geschlossen und das Relais K3 geöffnet, so dass der Strom für den Anlasser aus dem Akkumulator 14 entnommen wird. Die Verbraucher im Anlasserstromkreis Kr2 werden über das Relais K2, abhängig von der Steuerung 15, die die Verbraucher, abhängig von der Stellung des Zündschlüssels ansteuert, geschaltet. Das Relais K1 wird bereits in der Raststellung I (nicht gezeichnet) im Lenkradschloss (nicht gezeichnet) geschlossen, so dass die karosserieseitigen Verbraucher, wie z. B. die Geräte im Armaturenbrett bestromt werden. In der Raststellung II des Lenkradschlosses (nicht gezeichnet) wird das Relais K2 geschlossen und damit werden die Verbraucher des Anlasserstromkreises Kr2, wie z. B. das Motorsteuergerät, bestromt.

Beim Anlassvorgang, Raststellung III (nicht gezeichnet), im Lenkradschloss wird über die Steuerung 15 der Anlasser 16 geschaltet, der seinen Strom vom Akkumulator 14 bekommt. Wenn der Dieselmotor läuft, wird der Akkumulator 14 durch den Generator 13 geladen. Wenn über Kriterien, z. B. Motorlaufdauer und Motordrehzahl oder ein Strommessgerät, festgestellt wird, dass der Akkumulator 14 geladen ist, wird das Relais K4 geöffnet und das Relais K3 geschlossen. Jetzt arbeiten beide Generatoren 11, 13 auf den Karosseriestromkreis Kr1 und den Anlasserstromkreis Kr2 bzw. Kr1 und Kr2 geschaltet ist, ist für den nächsten Startvorgang ein vollgeladener Akkumulator 14 vorhanden.

Beim Abschalten des Motors, der Zündschlüssel im Lenkradschloss wird in die Stellung I gebracht, wird K2 geöffnet und wenn der Dieselmotor steht, wird K4 geschlossen und anschließend K3 geöffnet.

Falls durch irgendeinen Defekt in der Stromversorgungseinrichtung 10 der Akkumulator 14 nicht in der Lage ist, den Anlasser 16 mit dem Dieselmotor entsprechend zu drehen, ist ein manuell betätigbarer Schalter S3 vorgesehen, mit dem das Relais K3 schaltbar ist. Damit ist für einen Notfall der Karosseriestromkreis Kr1 und der Anlasserstromkreis Kr2 verbindbar, so dass der Akkumulator 12 und der Akkumulator 14 den Strom für den Anlasser liefern.

Die Kontrollleuchte H1 leuchtet in der Schließstellung des Schalters S3 auf.

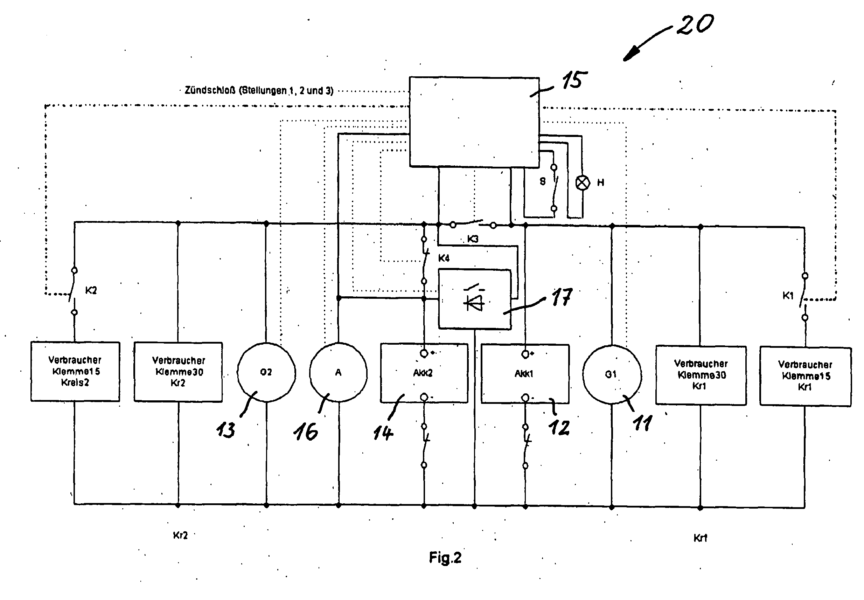

Die Fig. 2 zeigt die erfindungsgemäße Stromversorgungseinrichtung 20 mit einer Ladeerhaltungseinrichtung 17.

Bei geöffnetem Relais K4 wird, wenn die Generatoren 11, 13 mehr Strom erzeugen, als verbraucht wird und am Akkumulator 14 Spannungsabfall festgestellt wird, der genannte Akkumulator nachgeladen.

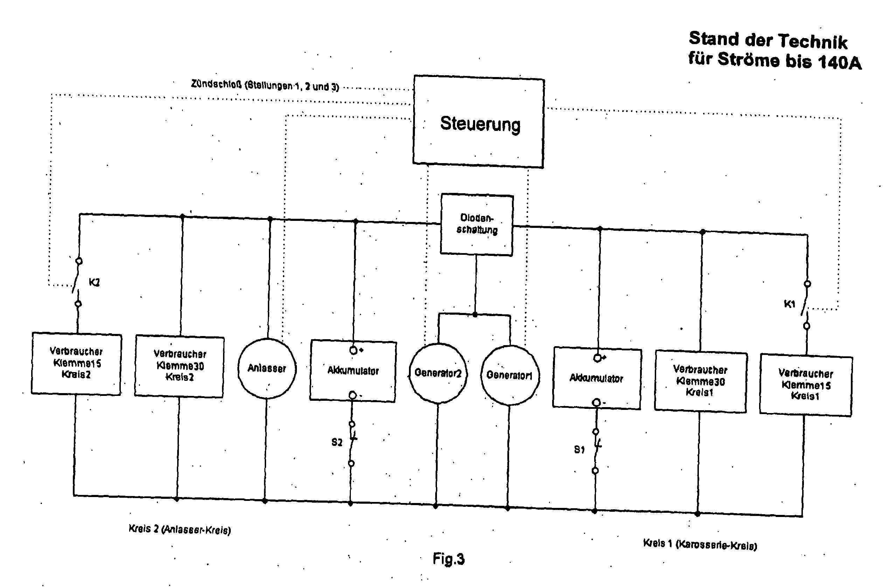

Die Fig. 3 zeigt den Stand der Technik. Die Diodenschaltung regelt die Verteilung des von den Generatoren erzeugten Stromes. Der Akkumulator im Anlasserstromkreis wird bevorzugt geladen. Die Diodenschaltung hat ihre Leistungsgrenze bei ca. 140A.

Für Nutzfahrzeuge wie z. B. Busse, sind aber auch, je nach Fahrzeugausrüstung, Ströme von über 140A nötig.

Eine Diodenschaltung für derartig hohe Ströme ist am Markt nicht erhältlich und wäre auch zu teuer.

## Patentansprüche

1. Stromversorgungs einrichtung mit zwei Ahlumulatoren und zwei Generatoren in einem Nutzfahrzeug unit Verbeserrungsmotor wobei ein einziger Generator und ein Akkumulator nicht zur Versorgung des Fahrzeugs ausnicht, mit einem Karrossenistromkreis (kr1), in dem ein erster Akkumulator (Akk 1) und ein ersten Generator (G1) vorgesehen sind, und mit einem Anlasserstromkreis (kr2), in dem ein zweiter Akkumulator (Akk 2) und ein zweiter Generator (G2) vorgesehen sind, und mit einer Schaltung, du die Strome der beiden Generatoren, je nach Bedarf auf die beiden Stromkreise verteilt,
**dadurch gekennzeichnet, dass**
der Karrossenistromkreis (kr1) und der Anlasser-stromkreis (kr2) mit einem ersten Relais (k3) verbindbar (k3 geschlossen) oder trumbar (k4 geöffnet) sind,
dass im Anlasserstromkreis (kr2) ein weiteres Relais (k4) vorgesehen ist, das den Akkumulator (Akk 2) im Anlasserstromkreis (kr2) mit dem Anlasserstromkreis verberich kann wobei das erste und das weitere Relais (k3,k4) derart schaltbar sind, dass vor und nach dem Startvorgung das weitere Relais (k4) so lange geschlossen bleibt und das erste Relais (k3) so lange geöffnet bleibt, so dass der Anlassertromkreis (k,2) und der Karossenistrombreis (kr1) von einander getrennt sind, bis der Akkumulator des (Akk2) des Anlasserstromkreises (k2) voll aufgeladen ist, souri dass, wenn der Akkumulator (Akk 2) des Anlasserstromkreises (kr2) voll aufgeladen ist, zuerst das weitere Relais (k4) geöfferet damit für einem Startvorgung ein voll aufgeladener Akkumulator (Akk 2) im Anlasserstromkreis (kr2) zur Verfugung steht und dann das erste Relais (k3) geschlossen wird, so dass beide Generatoren (G1,G2)x Strom in die zusammengeschalteten Stromkreise (kr1,kr2) liefen und dass an den Anlasserstromkreis (kr2) angeschlossene Verbraucher weniger Strom verbrauchen als die Verbraucher im Kerrossenistromkreis verbrauchen können.

## Claims

1. Power supply unit with two accumulators and two alternators in a commercial vehicle with internal combustion engine [1] with a vehicle body power circuit (Kr1) in which a first accumulator (Akk1) and a first alternator (G1) are provided, and also with a starter motor circuit (Kr2) in which a further acccumulator (Akk2) and a second alternator (G2) are provided, and with a circuit which divides the currents from these two alternators to the two power circuits as required,
**characterised in that**
the vehicle body circuit (Kr1) and the starter motor circuit (Kr2) can be connected (K3 closed) or disconnected (K4 opened) with a first relay (K3), and **in that** another relay (K4) is provided in the starter motor circuit (Kr2), [2] and whereby the first and the other relay (K3, K4) can be connected up in such a way that before and after the starting process, the other relay (K4) remains closed while the first relay (K3) remains open so that the starter motor circuit (Kr2) and vehicle body circuit (Kr1) are disconnected from one another until such time as the accumulator (Akk2) on starter motor circuit (Kr2) reaches a fully charged condition and that, when the accumulator (Akk2) on starter motor circuit (Kr2) is fully charged, first the other relay (K4) opens [3] and then the first relay (K3) closes, meaning that both alternators (G1, G2) are able to deliver electrical power into the interconnected power circuits (Kr1, Kr2) and that the consumers connected to the starter motor circuit (Kr2) consume less electrical power than the consumers on the vehicle body circuit are able to consume.

## Revendications

1. Dispositif d'alimentation électrique avec deux accumulateurs et deux alternateurs dans un véhicule industriel avec moteur à combustion interne, auquel cas un seul alternateur et un accumulateur ne suffisent pas à alimenter le véhicule en courant électrique, avec un circuit électrique pour la carrosserie (Kr1) dans lequel un premier accumulateur (Akk1) et un premier alternateur (G1) sont prévus, et avec un circuit électrique pour le démarreur (Kr2) dans lequel un deuxième accumulateur (Akk2) et un deuxième alternateur (G2) sont prévus, et avec un câblage qui distribue le courant produit par les deux alternateurs en fonction des besoins dans les deux circuits électriques,
**caractérisé en ce que**
le circuit électrique pour la carrosserie (Kr1) et le circuit électrique pour le démarreur (Kr2) peuvent être reliés entre eux (K3, fermés) ou séparés (K4, ouverts) à l'aide d'un premier relais (K3), **en ce qu'**un autre relais (K4), qui peut relier l'accumulateur (Akk2) connecté au circuit électrique pour le démarreur (Kr2) au circuit électrique pour le démarreur, est prévu dans le circuit électrique pour le démarreur (Kr2), auquel cas le premier et l'autre relais (K3, K4) sont pilotables de telle manière que, avant et après le démarrage, l'autre relais (K4) reste fermé et le premier relais (K3) reste ouvert aussi longtemps qu'il le faut de manière à ce que le circuit électrique pour le démarreur (Kr2) et le circuit électrique pour la carrosserie (Kr1) soient séparés l'un de l'autre jusqu'à ce que l'accumulateur (Akk2) du circuit électrique pour le démarreur (Kr2) soit complètement chargé, ainsi que jusqu'à ce que, si l'accumulateur (Akk2) du circuit électrique pour le démarreur (Kr2) est complètement chargée, l'autre relais (K4) soit tout d'abord ouvert afin qu'un accumulateur (Akk2) complètement chargé relié au circuit électrique pour le démarreur (Kr2) soit disponible pour un démarrage, puis le premier relais (K3) soit fermée de telle manière que les deux alternateurs (G1, G2) fournissent du courant électrique aux circuits électriques (Kr1, Kr2) reliés entre eux et **en ce que** les consommateurs reliés au circuit électrique pour le démarreur (Kr2) puissent consommer moins de courant que les consommateurs reliés au circuit électrique pour la carrosserie (Kr1).
